# EUROPÄISCHE PATENTANMELDUNG

(11) **EP 4 465 249 A1**
(43) Veröffentlichungstag der Anmeldung: **20.11.2024**
(21) Anmeldenummer: 23173290.0
(22) Anmeldetag: 15.05.2023
(51) Int. Cl.: G06V 10/762, G06V 10/774, G06V 10/82

(54) **VERFAHREN UND ANORDNUNG ZUM TESTEN EINER BILDERKENNUNGSEINRICHTUNG**

(71) Anmelder: Siemens Aktiengesellschaft, 80333 München (DE)
(72) Erfinder: Otte, Clemens, 81739 München (DE); Yang, Yinchong, 85579 Neubiberg (DE)
(74) Vertreter: Siemens Patent Attorneys

(57) **Zusammenfassung**

Es wird eine Perturbationseinrichtung (IREC) zum Modifizieren von Bildern (I1, I2, ...) bereitgestellt, wobei durch die vorzunehmenden Modifikationen physikalische Störeinflüsse bei einer Aufnahme von Kamerabildern simuliert werden, und wobei ein Parameterraum (PR) der Modifikationen durch einen Parametervektor (PV) parametrisiert wird. Weiterhin wird eine Vielzahl von Testbildern (I1, I2, ...) eingelesen, denen jeweils eine zu erkennende, erste Bildinformation (L1, L2, ...) zugeordnet ist. Darüber hinaus wird eine Vielzahl von Test-Parametervektoren (PV) generiert, und die Testbilder (I1, I2, ...) werden abhängig von einem jeweiligen Test-Parametervektor (PV) durch die Perturbationseinrichtung (PER) modifiziert. Die modifizierten Testbilder (MI1, MI2, ...) werden in die Bilderkennungseinrichtung (IREC) eingespeist, die daraus jeweils eine zweite Bildinformation (R1, R2, ...) ableitet. Weiterhin wird eine Abweichung (D) zwischen der jeweiligen ersten und zweiten Bildinformation ermittelt. Die Test-Parametervektoren (PV) werden dann durch eine Optimierungseinrichtung (OPT) dahingehend optimiert, dass die Abweichungen (D) zumindest im Mittel maximiert werden. Abhängig von den maximierten Abweichungen (D) wird schließlich ein Testergebnis (TR) für die Bilderkennungseinrichtung (IREC) ausgegeben.

## Beschreibung

Zum Steuern von komplexen Maschinen, wie z.B. Robotern, autonomen oder teilautonomen Transportmitteln oder Fertigungsanlagen werden im zunehmenden Maße datengetriebene Verfahren des maschinellen Lernens eingesetzt. Hierbei werden insbesondere künstliche neuronale Netze oder andere Maschinenlernmodelle darauf trainiert, aktuelle Betriebssituationen zu erkennen, zukünftige Betriebssituationen zu prädizieren und/oder situationsgerechte Steueraktionen zu generieren.

Eine konkrete Anwendung ist beispielsweise eine automatisierte Erkennung von Objekten, z.B. Personen oder Hindernissen, in Kamerabildern, die z.B. im Rahmen des autonomen oder teilautonomen Fahrens von Zügen, Kraftfahrzeugen oder anderen Transportmitteln aufgenommen werden.

Bevor ein komplexes Maschinenlernmodell, wie beispielsweise ein tiefes neuronales Netz, in sicherheitskritischen Anwendungen, wie z.B. dem autonomen Fahren, eingesetzt werden kann, ist es in der Regel erforderlich, dessen korrekte Funktion zu verifizieren oder sicherzustellen. In vielen Fällen sind die internen Modellstrukturen solcher Maschinenlernmodelle jedoch nicht mehr für Menschen interpretierbar. Mathematische Verfahren, mit denen eine korrekte Funktion von Maschinenlernmodellen formal bewiesen werden kann, sind zudem nur für einfache Modelle verfügbar.

In der Praxis werden deshalb Verfahren zum empirischen Testen von Maschinenlernmodellen bevorzugt. Bekannt sind Verfahren zum kombinatorischen Testen, bei denen beispielsweise Zweierkombinationen von vorgegebenen Betriebssituationen getestet werden. Wenn beispielsweise ein Straßenzustand durch eine erste Menge {trocken, nass, vereist, ...} beschrieben wird und eine Pose einer Person durch eine zweite Menge {stehend, kniend, liegend, ...}, so können entsprechend alle Zweierkombinationen von Elementen der ersten und der zweiten Menge getestet werden. Ein derartiges Verfahren ist beispielsweise aus der Publikation "A Combinatorial Approach to Testing Deep Neural Network-based Autonomous Driving Systems" von J. Chandrasekaran, Y. Lei, R. Kacker and D. Richard Kuhn, in IEEE International Conference on Software Testing, Verification and Validation, 2021 bekannt. Bei komplexeren Szenarien mit höherdimensionalen Zustandsräumen tritt hier allerdings das Problem auf, dass die Zahl der getesteten Fälle sehr viel kleiner ist als die Zahl der möglichen Fälle. Damit steigt das Risiko Fälle zu übersehen, in denen ein getestetes Maschinenlernmodell versagt.

Weiter ist bekannt, zum Testen der Robustheit einer Bilderkennung, deren Eingabebilder nach vorgegebenen Regeln zu manipulieren und eine hierdurch induzierte Reaktion der Bilderkennung zu bewerten. Hierbei tritt jedoch ebenfalls das Problem auf, dass in der Praxis viele Fälle auftreten können, die durch die vorgegebenen Regeln nicht abgedeckt werden.

Es ist Aufgabe der vorliegenden Erfindung, ein Verfahren sowie eine Anordnung zum Testen einer Bilderkennungseinrichtung anzugeben, die eine bessere und/oder effizientere Validierung der Bilderkennungseinrichtung erlauben.

Gelöst wird diese Aufgabe durch ein Verfahren mit den Merkmalen des Patentanspruchs 1, durch eine Anordnung mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruchs 12.

Zum Testen einer Bilderkennungseinrichtung wird eine Perturbationseinrichtung zum Modifizieren von Bildern bereitgestellt, wobei durch die vorzunehmenden Modifikationen physikalische Störeinflüsse bei einer Aufnahme von Kamerabildern simuliert werden, und wobei ein Parameterraum der vorzunehmenden Modifikationen durch einen Parametervektor parametrisiert wird. Weiterhin wird eine Vielzahl von digitalen Testbildern eingelesen, denen jeweils eine zu erkennende, erste Bildinformation zugeordnet ist. Darüber hinaus wird eine Vielzahl von Test-Parametervektoren generiert, und die Testbilder werden abhängig von einem jeweiligen Test-Parametervektor durch die Perturbationseinrichtung modifiziert. Die modifizierten Testbilder werden in die Bilderkennungseinrichtung eingespeist, die daraus jeweils eine zweite Bildinformation ableitet. Für ein jeweiliges Testbild und einen jeweiligen Test-Parametervektor wird dann eine Abweichung zwischen der jeweiligen ersten Bildinformation und der jeweiligen zweiten Bildinformation ermittelt und dem jeweiligen Test-Parametervektor zugeordnet. Weiterhin werden die Test-Parametervektoren durch eine Optimierungseinrichtung dahingehend optimiert, dass die zugeordneten Abweichungen zumindest im Mittel maximiert werden. Unter einem Maximieren sei insbesondere auch ein systematisches Annähern an ein Maximum verstanden. Abhängig von den maximierten Abweichungen wird schließlich ein Testergebnis für die Bilderkennungseinrichtung ausgegeben.

Zum Ausführen des erfindungsgemäßen Verfahrens sind eine entsprechende Anordnung, ein Computerprogrammprodukt sowie ein computerlesbares, vorzugsweise nichtflüchtiges Speichermedium vorgesehen.

Das erfindungsgemäße Verfahren sowie die erfindungsgemäße Anordnung können beispielsweise mittels eines oder mehrerer Computer, Prozessoren, anwendungsspezifischer integrierter Schaltungen (ASIC), digitaler Signalprozessoren (DSP) und/der sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Ein Vorteil der Erfindung ist insbesondere darin zu sehen, dass reale physikalische Störeinflüsse in einheitlicher Weise beim Testen von Bilderkennungseinrichtungen berücksichtigt werden können. Insofern derartige physikalische Störeinflüsse auf Kamerabilder aus der Praxis überwiegend vorbekannt sind, kann durch die Erfindung in vielen Fällen das Risiko, praxisrelevante Testfälle außer Acht zu lassen, effektiv gesenkt werden.

Vorteilhafte Ausführungsformen und Weiterbildungen der Erfindung sind in den abhängigen Ansprüchen angegeben.

Gemäß einer vorteilhaften Ausführungsform der Erfindung können als physikalische Störeinflüsse eine optische Verzerrung, eine perspektivische Transformation, eine Rotation, eine Bildunschärfe, eine bewegungsbedingte Unschärfe, eine wetterbedingte Beeinträchtigung, eine Kontraständerung und/oder eine Helligkeitsänderung von Kamerabildern, eine Verschmutzung einer Kameralinse und/oder ein Bildsensorrauschen simuliert werden. Die physikalischen Störeinflüsse können insbesondere durch Regen, durch Nebel, durch Schnee, durch tages- oder jahreszeitliche Helligkeitsschwankungen, durch auf einer Kameralinse, Windschutzscheibe oder Fensterscheibe befindliche Tropfen, Schneeflocken, Verschmutzungen oder Kratzer oder durch optische Verzerrungen einer Windschutzscheibe bedingt sein. Derartige Störeinflüsse treten in der Praxis häufig auf und sind mittels bekannter Bildgeneratoren oder Grafiksuiten, insbesondre mittels sog. Compositing-Programme in hinreichend realistischer Weise simulierbar. Durch die vorstehenden physikalischen Störeinflüsse kann eine Vielzahl von in der Praxis auftretenden Störeinflüssen beim Testen von Bilderkennungseinrichtungen abgedeckt werden.

Weiterhin kann durch den Parametervektor ein Typ oder eine Amplitude eines jeweiligen physikalischen Störeinflusses und/oder eine Anwendungsreihenfolge mehrerer physikalischer Störeinflüsse parametrisiert werden. Der Parametervektor kann insbesondere diskrete und/oder quasikontinuierliche Werte umfassen.

Nach einer weiteren vorteilhaften Ausführungsform der Erfindung kann zum Maximieren der Abweichungen ein gradientenfreies Optimierungsverfahren verwendet werden, insbesondere ein genetisches Verfahren, ein evolutionäres Verfahren und/oder eine Partikelschwarmoptimierung. Auf diese Weise können die Abweichungen auch in Fällen maximiert werden, bei denen ein Gradient nach dem Parametervektor nicht oder nur schwer berechnet werden kann. Darüber hinaus kann die Bilderkennungseinrichtung als Black-Box getestet werden. Bei lernbasierten Bilderkennungseinrichtungen ist insbesondere kein Zugriff auf deren Lernparameter erforderlich.

Gemäß einer weiteren vorteilhaften Ausführungsform der Erfindung kann bei der Maximierung der Abweichungen eine testbildübergreifende Maximierung von über die Testbilder akkumulierten Abweichungen ausgeführt werden. Abhängig von den maximierten akkumulierten Abweichungen kann dann ein testbildübergreifendes Testergebnis ausgegeben werden. Die Abweichungen können dabei akkumuliert werden, indem zu einem jeweiligen Test-Parametervektor eine gegebenenfalls gewichtete Summe oder ein Mittelwert der für alle Testbilder ermittelten Abweichungen gebildet und diesem Test-Parametervektor zugeordnet wird. Auf diese Weise kann eine globale, bildübergreifende Robustheit der Bilderkennungseinrichtung getestet werden.

Weiterhin kann bei der Maximierung der Abweichungen eine für ein jeweiliges Testbild spezifische Maximierung von testbildspezifischen Abweichungen ausgeführt werden. Abhängig von den maximierten testbildspezifischen Abweichungen kann dann ein testbildspezifisches Testergebnis ausgegeben werden. Auf diese Weise kann für jedes Testbild eine eigene Optimierung ausgeführt werden, bei der gezielt testbildspezifische Perturbationen gesucht werden, die die Bildererkennung möglicherweise falsifizieren. So können insbesondere Testbilder identifiziert werden, bei denen die Bildererkennungseinrichtung möglicherweise oder wahrscheinlich versagt.

Darüber hinaus können die Testbilder durch eine Clusteranalyse gemäß einem vorgegebenen Ähnlichkeitsmaß in Gruppen eingeteilt werden. Ein solches Ähnlichkeitsmaß wird im Zusammenhang mit Clusteranalysen häufig auch als Proximitätsmaß bezeichnet. Bei der Maximierung der Abweichungen kann dann eine für eine jeweilige Gruppe spezifische Maximierung von über diese Gruppe akkumulierten Abweichungen ausgeführt werden. Abhängig von den maximierten über diese Gruppe akkumulierten Abweichungen kann schließlich ein gruppenspezifisches Testergebnis ausgegeben werden. Auf diese Weise kann für jede Gruppe eine eigene Optimierung ausgeführt werden, bei der gezielt gruppenspezifische Perturbationen gesucht werden, die die Bildererkennung möglicherweise falsifizieren. So können insbesondere Bildgruppen identifiziert werden, bei denen die Bildererkennungseinrichtung möglicherweise oder wahrscheinlich versagt.

Nach einer weiteren vorteilhaften Ausführungsform der Erfindung kann die Bilderkennungseinrichtung aus den eingespeisten modifizierten Testbildern zusätzlich zur jeweiligen zweiten Bildinformation eine Unsicherheit der jeweiligen zweiten Bildinformation ableiten. Die Ermittlung einer Abweichung zwischen einer jeweiligen ersten Bildinformation und einer jeweiligen zweiten Bildinformation kann dann abhängig von deren Unsicherheit erfolgen. Insbesondere kann die Abweichung durch die Unsicherheit vergrößert werden. Vorzugsweise kann eine jeweilige Abweichung gebildet werden, indem eine jeweilige Unsicherheit ggf. gewichtet zu einem Abstand zwischen einer jeweiligen ersten Bildinformation und einer jeweiligen zweiten Bildinformation addiert wird. Ein solcher Abstand kann beispielsweise als euklidischer Abstand zwischen eine jeweilige Bildinformation darstellenden Vektoren ermittelt werden. Die Unsicherheit kann insbesondere durch eine Streubreite, eine Varianz, eine Fehlerangabe, ein Fehlerquantil oder eine Wahrscheinlichkeitsverteilung der jeweiligen zweiten Bildinformation dargestellt werden.

Gemäß einer weiteren vorteilhaften Ausführungsform der Erfindung können reale physikalische Störeinflüsse auf Kamerabilder realer Situationen quantitativ erfasst werden. Der Parameterraum kann dann insofern beschränkt werden, als die hierdurch parametrisierten Modifikationen in quantitativer Abhängigkeit von den realen physikalischen Störeinflüssen beschränkt werden. Insbesondere kann der Parameterraum auf Modifikationen beschränkt werden, die die erfassten realen physikalischen Störeinflüsse quantitativ im Wesentlichen nicht überschreiten. Durch eine Beschränkung des Parameterraums auf realistische Modifikationen kann in vielen Fällen effizient verhindert werden, dass die Optimierung zu trivialerweise nicht bewertbaren oder erkennbaren Bildmodifikationen führt, z.B. zu Bildmodifikationen mit Kontrast Null.

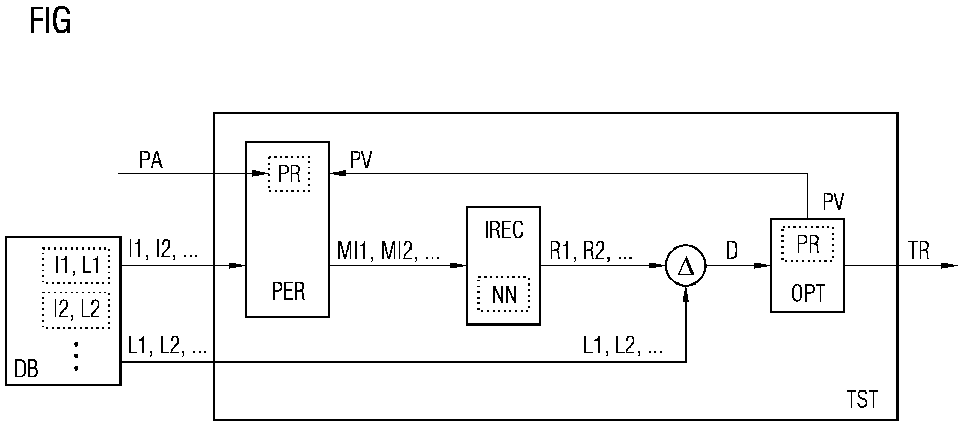

Ein Ausführungsbeispiel der Erfindung wird nachfolgend anhand der Zeichnung näher erläutert.

Die Figur veranschaulicht eine Anordnung zum Testen einer Bilderkennungseinrichtung.

In der Figur ist eine Anordnung TST zum Testen einer gegebenen Bilderkennungseinrichtung IREC schematisch dargestellt. Letztere kann insbesondere zur automatisierten Erkennung und/oder Lokalisierung von Objekten, Personen oder anderen Mustern auf Kamerabildern vorgesehen sein. Mittels der Bilderkennungseinrichtung IREC kann dann beispielsweise ein Kraftfahrzeug, ein Schienenfahrzeug, ein Flugzeug, ein anderes Verkehrsmittel, ein autonomes oder teilautonomes Transportmittel, ein Roboter, eine Produktionsanlage oder ein Unfallvermeidungssystem gesteuert werden.

Für das vorliegende Ausführungsbeispiel sei angenommen, dass die Bilderkennungseinrichtung IREC lernbasiert ist und ein künstliches neuronales Netz NN umfasst. Das neuronale Netz NN wurde mittels eines Verfahrens des maschinellen Lernens vorab darauf trainiert, anhand eines eingespeisten digitalen Kamerabildes eine Bildinformation über ein darauf zu erkennendes Objekt, eine darauf zu erkennende Person und/oder eine darauf zu erkennende Bildstruktur auszugeben. Eine solche Bildinformation kann insbesondere eine Angabe darüber umfassen, ob ein Objekt, eine Person oder eine vorgegebene Struktur erkannt wird, welches Objekt, welche Person oder welche Struktur erkannt wird, welche Eigenschaft das Objekt, die Person oder die Struktur aufweist und/oder wo sich das Objekt, die Person oder die Struktur befindet. Darüber hinaus kann die Bildinformation auch eine Angabe über ein erkanntes Merkmal, eine erkannte Eigenschaft oder ein erkanntes Attribut des eingespeisten Kamerabildes umfassen. Zur Durchführung eines solchen Trainings steht eine Vielzahl von effizienten Lernverfahren, insbesondere von Verfahren des überwachten Lernens zur Verfügung. Es sei an dieser Stelle angemerkt, dass mittels der Erfindung auch Bilderkennungseinrichtungen getestet werden können, die nicht lernbasiert sind.

Bevor die Bilderkennungseinrichtung IREC in einer sicherheitskritischen Anwendung eingesetzt wird, soll mittels der Testanordnung TST geprüft werden, ob die Bilderkennungseinrichtung IREC bei real aufgenommen Kamerabildern zuverlässig funktioniert. D.h. ob die Bilderkennungseinrichtung IREC eine zu erkennende Bildinformation in typischen Anwendungsszenarien auch zuverlässig erkennt. Dabei soll berücksichtigt werden, dass reale Kamerabilder typischerweise verschiedenen physikalischen Störeinflüssen unterworfen sind. Letztere können beispielsweise durch Regen, Nebel, Schnee, durch auf einer Kameralinse, Windschutzscheibe oder Fensterscheibe befindliche Tropfen, Verschmutzungen oder Kratzer oder durch optische Verzerrungen oder Bildunschärfen verursacht werden. Die Bilderkennungseinrichtung IREC soll eine jeweilige Bildinformation möglichst unter allen oder zumindest unter hinreichend vielen real auftretenden Störeinflüssen korrekt erkennen oder gegebenenfalls eine Nichterkennung zuverlässig anzeigen.

Zur Simulation von realistischen physikalischen Störeinflüssen auf Kamerabilder verfügt die Testanordnung TST über eine parametrisierbare Perturbationseinrichtung PER, durch die zugeführte Bilder entsprechend modifiziert werden. Für derartige Bildmodifikationen steht eine Vielzahl von bekannten Bildverarbeitungsprogrammen, z.B. in der Blender-Grafiksuite zur Verfügung.

Die vorzunehmenden Bildmodifikationen werden jeweils durch einen Parametervektor PV parametrisiert, der eine Anwendungsreihenfolge der physikalischen Störeinflüsse sowie deren jeweiligen Typ und deren jeweilige Amplitude angibt. Die Perturbationseinrichtung PER wird durch den jeweiligen Parametervektor PV entsprechend gesteuert. In der Praxis kann der Parametervektor PV beispielsweise 30 oder mehr Dimensionen aufweisen.

Ein Parameterraum PR von zulässigen Parametervektoren PV wird vorab so gewählt oder beschränkt, dass durch die Parametervektoren PV des Parameterraums PR nur realistische Bildmodifikationen induziert werden. D.h. Bildmodifikationen, die typischerweise auch in realen Situationen auftreten.

Bei vielen Bildverarbeitungsprogrammen zur Simulation von physikalischen Störeinflüssen sind bereits realistische Amplitudenbereiche für diese Störeinflüsse vorkonfiguriert. Solche realistischen Amplitudenbereiche können beispielsweise dadurch ermittelt werden, dass realen physikalischen Störeinflüssen unterworfene Kamerabilder realer Situationen mit ungestörten Bildern verglichen werden und so ein jeweiliger physikalischer Störeinfluss quantitativ erfasst wird. Die Amplitudenbereiche für realistische Parametervektoren PV können dann so beschränkt werden, dass die hierdurch induzierten Bildmodifikationen die erfassten physikalischen Störeinflüsse quantitativ im Wesentlichen nicht überschreiten.

Im vorliegenden Ausführungsbeispiel werden der Perturbationseinrichtung PER Störamplitudenangaben PA zugeführt, durch die jeweils ein realistischer Amplitudenbereich eines jeweiligen physikalischen Störeinflusses spezifiziert wird. Der für Bildmodifikationen der Perturbationseinrichtung PER verwendbare Parameterraum PR wird dadurch auf realistische Bildmodifikationen eingeschränkt.

Zum Testen der Bilderkennungseinrichtung IREC greift die Testanordnung TST auf eine Datenbank DB zurück, in der eine Vielzahl von digitalen Kamerabildern I1, 12, ... realer Situationen gespeichert ist. Jedem der Kamerabilder I1 bzw. I2, ... ist jeweils eine Bildinformation L1 bzw. L2, ... zugeordnet, die durch die Bilderkennungseinrichtung IREC bestimmungsgemäß korrekt erkannt werden sollte. Einen solche zu erkennende Bildinformation wird im Zusammenhang des maschinellen Lernens häufig auch als Label bezeichnet. Die Kamerabilder I1, I2, ... sind in diesem Sinne also gelabelt. Eine Bildinformation L1 bzw. L2, ... kann vorzugsweise als Merkmalsvektor dargestellt werden. Letzterer kann diskrete Vektorelemente, die das zugeordnete Bild beispielsweise klassifizieren, und/oder quasikontinuierliche Vektorelemente, die beispielsweise eine Position eines darauf erkannten Objekts angeben, umfassen.

Die Kamerabilder I1, I2, ... werden als Testbilder durch die Testanordnung TST aus der Datenbank DB ausgelesen und in die Perturbationseinrichtung PER eingespeist. In der Praxis können so mehrere Tausend oder viele Tausend Testbilder durch die Testanordnung TST verarbeitet werden. Zu jedem Testbild I1 bzw. I2, ... wird dabei auch die jeweils zugeordnete erste Bildinformation L1 bzw. L2, ... durch die Testanordnung TST ausgelesen

Durch die Perturbationseinrichtung PER werden die Testbilder I1, I2, ... abhängig von einem zugeführten Test-Parametervektor PV aus dem Parameterraum PR modifiziert. Aus einem jeweiligen Testbild I1 bzw. I2, ... wird so ein jeweiliges modifiziertes Testbild MI1 bzw. MI2, ... erzeugt. Insofern dieser Test-Parametervektor PV aus dem zulässigen Parameterraum PR stammt, simuliert die hierdurch induzierte Bildmodifikation reale physikalische Störeinflüsse in realistischer Weise.

Zu Beginn des Verfahrens kann ein initialer Test-Parametervektor PV in zufälliger Weise aus dem Parameterraum PR ausgewählt werden. Im späteren Verfahren werden die Test-Parametervektoren PV durch eine Optimierungseinrichtung OPT der Testanordnung TST generiert und optimiert.

Die modifizierten Testbilder MI1, MI2, ... werden von der Perturbationseinrichtung PER zur Bilderkennungseinrichtung IREC übermittelt. Letztere leitet aus einem jeweiligen modifizierten Testbild MI1 bzw. MI2, ... bestimmungsgemäß eine jeweilige zweite Bildinformation R1 bzw. R2, ... ab.

Die jeweilige zweite Bildinformation R1 bzw. R2, ... wird mit der dem jeweiligen Testbild I1 bzw. I2, ... zugeordneten, ersten Bildinformation L1 bzw. L2, ... verglichen. Dabei wird eine jeweilige Abweichung D zwischen der jeweiligen ersten Bildinformation L1 bzw. L2, ... und der jeweiligen zweiten Bildinformation R1 bzw. R2, ... ermittelt und dem die Bildmodifikation parametrisierenden Test-Parametervektor PV zugeordnet. Eine jeweilige Abweichung D kann dabei insbesondere als euklidischer Abstand zwischen eine erste und eine zweite Bildinformation darstellenden Merkmalsvektoren ermittelt werden. Alternativ oder zusätzlich kann eine jeweilige Abweichung D auch mittels eines sogenannten Intersection-over-Union-Verfahrens berechnet werden. Die Abweichungen D können offenbar als Maß für einen Erkennungsfehler der Bilderkennungseinrichtung IREC aufgefasst werden.

Sofern die Bilderkennungseinrichtung IREC neben einer jeweiligen zweiten Bildinformation R1 bzw. R2, ... auch deren jeweilige Unsicherheit, z.B. in Form eines Fehlerintervalls ausgibt, kann diese Unsicherheit bei der Ermittlung einer jeweiligen Abweichung D berücksichtigt werden.

Die ermittelten Abweichungen D werden in die Optimierungseinrichtung OPT eingespeist und dort bewertet. Abhängig davon führt die Optimierungseinrichtung OPT ein vorzugsweise gradientenfreies Optimierungsverfahren, z.B. eine Partikelschwarmoptimierung, ein genetisches oder ein evolutionäres Optimierungsverfahren zum Optimieren der Test-Parametervektoren PV aus. Die Test-Parametervektoren PV werden dabei dahingehend optimiert, dass die zugeordneten Abweichungen D zumindest im Mittel maximiert werden.

Zu diesem Zweck generiert die Optimierungseinrichtung OPT abhängig von den Abweichungen D eine Vielzahl von neuen Test-Parametervektoren PV aus dem zulässigen Parameterraum PR und führt diese der Perturbationseinrichtung PER zu. Durch die generierten Test-Parametervektoren PV wird die Perturbationseinrichtung PER wiederum dazu veranlasst, eine Vielzahl unterschiedlich modifizierter Testbilder MI1, MI2, ... zu erzeugen. Aus den modifizierten Testbildern MI1, MI2, ... wird durch Bilderkennungseinrichtung IREC wiederum jeweils eine zweite Bildinformation R1 bzw. R2, ... abgeleitet und mit einer jeweiligen ersten Bildinformation L1 bzw. L2, ... verglichen, um eine jeweilige Abweichung D, wie oben beschrieben, zu ermitteln. Die ermittelten Abweichungen D werden dann wieder der Optimierungseinrichtung OPT zugeführt.

Durch das Optimierungsverfahren werden neue Test-Parametervektoren PV bevorzugt in solchen Bereichen des zulässigen Parameterraums PR erzeugt, bei deren Anwendung sich die Abweichungen D und damit der Erkennungsfehler der Bilderkennungseinrichtung IREC erhöhen. Auf diese Weise wird die Optimierung gezielt in Bereiche des Parameterraums PR getrieben, in denen eine hohe Wahrscheinlichkeit besteht, die Bilderkennungseinrichtung IREC zu falsifizieren.

Nach einer Ausgestaltungsvariante der Optimierung können die für einen jeweiligen Test-Parametervektor PV ermittelten Abweichungen D über die Testbilder I1, I2, ... zu einer testbildübergreifenden Abweichung akkumuliert werden, die diesem Test-Parametervektor PV zugeordnet wird. Die Akkumulierung kann insbesondere durch Summenbildung oder Mittelwertbildung erfolgen. Entsprechend kann dann im Rahmen des Optimierungsverfahrens die testbildübergreifende Abweichung zumindest im Mittel maximiert werden. Die testbildübergreifende Abweichung kann dabei als globaler Erkennungsfehler der Bilderkennungseinrichtung IREC aufgefasst werden.

Alternativ oder zusätzlich kann für jedes der Testbilder I1, I2, ... eine eigene Optimierung ausgeführt werden, bei der gezielt testbildspezifische Parametervektoren PV gesucht werden, die die Bildererkennung möglicherweise falsifizieren. So können insbesondere Testbilder identifiziert werden, bei denen die Bildererkennungseinrichtung IREC wahrscheinlich versagt.

Nach einer weiteren alternativen oder zusätzlichen Ausgestaltungsvariante des Verfahrens können die Testbilder I1, I2, ... bevor sie der Perturbationseinrichtung PER zugeführt werden, durch eine Clusteranalyse gemäß einem vorgegebenen Ähnlichkeitsmaß in Gruppen ähnlicher Bilder eingeteilt werden. Für jede dieser Gruppen können dann die ermittelten Abweichungen D über die betreffende Gruppe zu einer gruppenspezifischen Abweichung akkumuliert werden. Die Akkumulierung kann dabei insbesondere durch Summenbildung oder Mittelwertbildung erfolgen. Entsprechend kann für jede Gruppe eine eigene gruppenspezifische Optimierung ausgeführt werden, indem die jeweilige gruppenspezifische Abweichung zumindest im Mittel maximiert wird. Auf diese Weise können Bildgruppen identifiziert werden, bei denen die Bildererkennungseinrichtung IREC wahrscheinlich versagt.

Nach erfolgter Optimierung wird von der Optimierungseinrichtung OPT abhängig von den maximierten Abweichungen D ein Testergebnis TR für die Bilderkennungseinrichtung IREC ausgegeben. Gemäß den oben erwähnten Ausgestaltungsvarianten kann ein testbildübergreifendes, ein testbildspezifisches und/oder eine gruppenspezifisches Testergebnis TR ermittelt und ausgegeben werden.

Als Testergebnis TR kann insbesondere eine maximale Abweichung und/oder ein Testbild mit maximaler Abweichung ausgegeben werden. Die maximale Abweichung kann insbesondere testbildspezifisch, testbildübergreifend oder gruppenspezifisch ermittelt werden. Die maximale Abweichung kann offenbar als Maß für den Erkennungsfehler der Bilderkennungseinrichtung IREC aufgefasst werden.

Darüber hinaus kann die maximale Abweichung mit einem vorgegebenen Schwellwert verglichen werden. Sofern die maximale Abweichung den Schwellwert nicht überschreitet, wird die Bilderkennungseinrichtung IREC für eine sicherheitskritische Anwendung validiert, andernfalls nicht. Infolge einer solchen Validierung kann die Bilderkennungseinrichtung IREC beispielsweise zum Steuern eines Kraftfahrzeugs, eines Schienenfahrzeugs, eines Flugzeugs, eines anderen Verkehrsmittels, eines autonomen oder teilautonomen Transportmittels, eines Roboters, einer Produktionsanlage oder eines Unfallvermeidungssystems eingesetzt werden.

Insofern mögliche physikalische Störeinflüsse auf Kamerabilder überwiegend vorbekannt und durch Programmbibliotheken auch quantitativ hinreichend genau simulierbar sind, kann durch die Erfindung in vielen Fällen das Risiko, praxisrelevante Testfälle außer Acht zu lassen, effektiv gesenkt werden. Insbesondere können auch größere physikalische Störeinflüsse getestet werden, sofern sie realistisch sind.

## Patentansprüche

1. Computerimplementiertes Verfahren zum Testen einer Bilderkennungseinrichtung (IREC), wobei
a) eine Perturbationseinrichtung (PER) zum Modifizieren von Bildern (I1, I2, ...) bereitgestellt wird, wobei durch die vorzunehmenden Modifikationen physikalische Störeinflüsse bei einer Aufnahme von Kamerabildern simuliert werden, und wobei ein Parameterraum (PR) der vorzunehmenden Modifikationen durch einen Parametervektor (PV) parametrisiert wird,
b) eine Vielzahl von digitalen Testbildern (I1, I2, ...) eingelesen wird, denen jeweils eine zu erkennende, erste Bildinformation (L1, L2, ...) zugeordnet ist,
c) eine Vielzahl von Test-Parametervektoren (PV) generiert wird,
d) die Testbilder (11, I2, ...) abhängig von einem jeweiligen Test-Parametervektor (PV) durch die Perturbationseinrichtung (PER) modifiziert werden,
e) die modifizierten Testbilder (MI1, MI2, ...) in die Bilderkennungseinrichtung (IREC) eingespeist werden, die daraus jeweils eine zweite Bildinformation (R1, R2, ...) ableitet,
f) für ein jeweiliges Testbild (I1, I2, ...) und einen jeweiligen Test-Parametervektor (PV) eine Abweichung (D) zwischen der jeweiligen ersten Bildinformation (L1, L2, ...) und der jeweiligen zweiten Bildinformation (R1, R2, ...) ermittelt und dem jeweiligen Test-Parametervektor (PV) zugeordnet wird,
g) die Test-Parametervektoren (PV) durch eine Optimierungseinrichtung (OPT) dahingehend optimiert werden, dass die zugeordneten Abweichungen (D) zumindest im Mittel maximiert werden, und
h) abhängig von den maximierten Abweichungen (D) ein Testergebnis (TR) für die Bilderkennungseinrichtung (IREC) ausgegeben wird.

2. Verfahren nach Anspruch 1, **dadurch gekennzeichnet, dass** als physikalische Störeinflüsse eine optische Verzerrung, eine perspektivische Transformation, eine Rotation, eine Bildunschärfe, eine bewegungsbedingte Unschärfe, eine wetterbedingte Beeinträchtigung, eine Kontraständerung und/oder eine Helligkeitsänderung von Kamerabildern, eine Verschmutzung einer Kameralinse und/oder ein Bildsensorrauschen simuliert werden.

3. Verfahren nach einem der vorhergehenden Ansprüche, **dadurch gekennzeichnet, dass**
durch den Parametervektor (PV) ein Typ oder eine Amplitude eines jeweiligen physikalischen Störeinflusses und/oder eine Anwendungsreihenfolge mehrerer physikalischer Störeinflüsse parametrisiert wird.

4. Verfahren nach einem der vorhergehenden Ansprüche, **dadurch gekennzeichnet, dass**
zum Maximieren der Abweichungen (D) ein gradientenfreies Optimierungsverfahren verwendet wird.

5. Verfahren nach einem der vorhergehenden Ansprüche, **dadurch gekennzeichnet,**
**dass** bei der Maximierung der Abweichungen (D) eine testbildübergreifende Maximierung von über die Testbilder (I1, I2, ...) akkumulierten Abweichungen (D) ausgeführt wird, und
**dass** abhängig von den maximierten akkumulierten Abweichungen ein testbildübergreifendes Testergebnis (TR) ausgegeben wird.

6. Verfahren nach einem der vorhergehenden Ansprüche, **dadurch gekennzeichnet,**
**dass** bei der Maximierung der Abweichungen (D) eine für ein jeweiliges Testbild (I1, I2, ...) spezifische Maximierung von testbildspezifischen Abweichungen (D) ausgeführt wird, und
**dass** abhängig von den maximierten testbildspezifischen Abweichungen ein testbildspezifisches Testergebnis (TR) ausgegeben wird.

7. Verfahren nach einem der vorhergehenden Ansprüche, **dadurch gekennzeichnet,**
**dass** die Testbilder durch eine Clusteranalyse gemäß einem vorgegebenen Ähnlichkeitsmaß in Gruppen eingeteilt werden, dass bei der Maximierung der Abweichungen (D) eine für eine jeweilige Gruppe spezifische Maximierung von über diese Gruppe akkumulierten Abweichungen (D) ausgeführt wird, und
**dass** abhängig von den maximierten über diese Gruppe akkumulierten Abweichungen ein gruppenspezifisches Testergebnis (TR) ausgegeben wird.

8. Verfahren nach einem der vorhergehenden Ansprüche, **dadurch gekennzeichnet,**
**dass** die Bilderkennungseinrichtung (IREC) aus den eingespeisten modifizierten Testbildern (MI1, MI2, ...) zusätzlich zur jeweiligen zweiten Bildinformation (R1, R2, ...) eine Unsicherheit der jeweiligen zweiten Bildinformation (R1, R2, ...) ableitet, und
**dass** die Ermittlung einer Abweichung (D) zwischen einer jeweiligen ersten Bildinformation (L1, L2, ...) und einer jeweiligen zweiten Bildinformation (R1, R2, ...) abhängig von deren Unsicherheit erfolgt.

9. Verfahren nach einem der vorhergehenden Ansprüche, **dadurch gekennzeichnet,**
**dass** reale physikalische Störeinflüsse auf Kamerabilder realer Situationen quantitativ erfasst werden, und
**dass** der Parameterraum (PR) insofern beschränkt wird, als die hierdurch parametrisierten Modifikationen in quantitativer Abhängigkeit von den realen physikalischen Störeinflüssen beschränkt werden.

10. Anordnung zum Testen einer Bilderkennungseinrichtung (IREC), mit Mitteln zum Ausführen der Schritte eines Verfahrens nach einem der vorhergehenden Ansprüche.

11. Computerprogrammprodukt, umfassend Befehle, die bei der Ausführung des Programms durch einen Computer diesen veranlassen ein Verfahren nach einem der Ansprüche 1 bis 9 auszuführen.

12. Computerlesbares Speichermedium mit einem Computerprogrammprodukt nach Anspruch 11.
